# EUROPEAN PATENT APPLICATION

(11) **EP 4 675 389 A1**
(43) Date of publication of application: **07.01.2026**
(21) Application number: 24766404.8
(22) Date of filing: 04.03.2024
(51) Int. Cl.: G05D 1/639, G05D 105/10, A47L 11/00, E04H 4/16

(54) **METHOD AND APPARATUS FOR CONTROLLING REVERSING APPARATUS OF POOL CLEANING ROBOT**

(30) Priority: 09.03.2023 CN 202310224097
(71) Applicant: Wybotics Co., Ltd, Tianjin 300462 (CN)
(72) Inventor: WANG, Yueming, Tianjin 300462 (CN); LI, Xiaotian, Tianjin 300462 (CN); SONG, Jianhong, Tianjin 300462 (CN); LI, Baoze, Tianjin 300462 (CN)
(74) Representative: Epping - Hermann - Fischer
(86) International application number: PCT/CN2024/079901
(87) International publication number: WO 2024/183689

(57) **Abstract**

A method for controlling a steering apparatus of a pool cleaning robot is provided. The method includes: determining a motion state of the pool cleaning robot by obtaining a detection signal output by the steering apparatus (120); and based on the motion state of the pool cleaning robot, controlling the pool cleaning robot to perform a steering operation or confirm steering completion. The detection signal outputted by the steering apparatus comprises a first signal and a second signal. The first signal is configured for indicating that the pool cleaning robot is in a first state, and the second signal is configured for indicating that the pool cleaning robot is in a second state. The running speed of the pool cleaning robot in the first state is not equal to zero, and the running speed of the pool cleaning robot in the second state is zero. Also provided are an apparatus for controlling a steering apparatus of a pool cleaning robot, a steering device for a pool cleaning robot, and a computer-readable storage medium. In the controlling method, the current motion state of the pool cleaning robot is adjusted by controlling the steering apparatus, avoiding the robot from being in the same motion state for a long time, thereby improving the cleaning efficiency.

## Description

The present disclosure claims priority to Chinese Patent Application No. 2023102240973 entitled "METHOD AND APPARATUS FOR CONTROLLING STEERING APPARATUS OF POOL CLEANING ROBOT, MEDIUM AND DEVICE" and filed on March 9, 2023, the entire contents of which are incorporated herein by reference.

### TECHNICAL FIELD

The present disclosure relates to the field of robot control technology, and more particularly, to a method and an apparatus for controlling a steering apparatus of a pool cleaning robot.

### BACKGROUND

A pool cleaning robot (such as a pool sewage suction robot) is a robot designed for cleaning needs of a pool. The bottom wall and even side walls of the pool may be cleaned through a cleaning unit on the pool sewage suction robot. However, when cleaning different pools, the pool sewage suction robot may stop moving (cleaning) when encountering obstacles or reaching the pool wall during the cleaning process, causing the cleaning to be obstructed or requiring manual intervention to redirect the pool sewage suction robot to continue cleaning, which makes it difficult for a steering apparatus of the pool sewage suction robot to accurately determine the operating state of the pool sewage suction robot, and makes it unable to adjust the halted state of the pool sewage suction robot in time, and thus reduces the pool cleaning efficiency of the pool sewage suction robot.

### SUMMARY

The present disclosure aims to provide a method and an apparatus for controlling a steering apparatus of a pool cleaning robot. The pool cleaning robot in the present disclosure includes a pool sewage suction robot, and the technical solutions are as follows.

According to a first aspect of the present disclosure, there is provided a method for controlling a steering apparatus of a pool cleaning robot. The method includes: determining a motion state of the pool cleaning robot by obtaining a detection signal output by the steering apparatus; and controlling, based on the motion state of the pool cleaning robot, the pool cleaning robot to perform a steering operation or confirm steering completion.

According to a second aspect of the present disclosure, there is provided an apparatus for controlling a steering apparatus of a pool cleaning robot. The apparatus includes: a determination module configured to determine a motion state of the pool sewage suction robot by obtaining a detection signal output by the steering apparatus; and a control module configured to control, based on the motion state of the pool sewage suction robot, the pool sewage suction robot to perform a steering operation or confirm steering completion.

According to a third aspect of the present disclosure, there is provided a steering device for a pool sewage suction robot. The device includes: a memory, a processor, and a computer program stored on the memory and executable by the processor. The processor executes the computer program to: determine a motion state of the pool cleaning robot by obtaining a detection signal output by a steering apparatus; and control, based on the motion state of the pool cleaning robot, the pool cleaning robot to perform a steering operation or confirm steering completion.

According to a fourth aspect of the present disclosure, there is provided a computer-readable storage medium storing a computer program thereon. The computer program is executed by the processor to: determine a motion state of the pool cleaning robot by obtaining a detection signal output by a steering apparatus; and control, based on the motion state of the pool cleaning robot, the pool cleaning robot to perform a steering operation or confirm steering completion.

### BRIEF DESCRIPTION OF THE DRAWINGS

The accompanying drawings herein are incorporated in and constitute a part of this specification, illustrate embodiments conforming to the present disclosure and, together with the specification, serve to explain the principles of the present disclosure. Apparently, the accompanying drawings in the following description are merely some embodiments of the present disclosure. To those of ordinary skills in the art, other accompanying drawings may also be derived from these accompanying drawings without creative efforts.
FIG. 1 shows a schematic diagram of an application scenario of a method for controlling a steering apparatus of a pool sewage suction robot according to an embodiment of the present disclosure;
FIG. 2 shows a flowchart of the method for controlling a steering apparatus of a pool sewage suction robot according to an embodiment of the present disclosure;
FIG. 3 shows a first path diagram of the pool sewage suction robot according to an embodiment of the present disclosure;
FIG. 4 shows a second path diagram of the pool sewage suction robot according to an embodiment of the present disclosure;
FIG. 5 shows a third path diagram of the pool sewage suction robot according to an embodiment of the present disclosure;
FIG. 6 shows a first schematic diagram illustrating the variation of a detection signal according to an embodiment of the present disclosure;
FIG. 7 shows a second schematic diagram illustrating the variation of a detection signal according to an embodiment of the present disclosure;
FIG. 8 shows a third schematic diagram illustrating the variation of a detection signal according to an embodiment of the present disclosure;
FIG. 9 shows a fourth schematic diagram illustrating the variation of a detection signal according to an embodiment of the present disclosure;
FIG. 10 shows a structural diagram of an apparatus for controlling a steering apparatus of a pool sewage suction robot according to an embodiment of the present disclosure; and
FIG. 11 shows a structural diagram of a steering device for a pool sewage suction robot according to an embodiment of the present disclosure.

### DETAILED DESCRIPTION

To make the objectives, technical solutions and advantages of the present disclosure clearer, the embodiments of the present disclosure will be further described in detail below with reference to the accompanying drawings.

The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with some aspects related to the present disclosure as recited in the appended claims.

**In** the description of the present disclosure, it should be understood that the terms such as "first" and "second" are used only for purposes of description and should be understood as indicating or implying relative importance. The specific significations of the above terms in the present disclosure may be understood in the light of specific conditions by persons of ordinary skill in the art. Furthermore, in the description of the present disclosure, unless otherwise specified, "a plurality of" refers to two or more. The "and/or" used for describing an association relationship between associated objects represents presence of three relationships. For example, A and/or B may represent presence of A only, presence of both A and B, and presence of B only. Character "/" generally indicates that an "or" relationship is present between the adjacent associated objects.

A pool sewage suction robot is a robot designed for cleaning needs of a pool. The bottom wall and even side walls of the pool can be cleaned through a cleaning unit (such as a roller or a suction unit) on the pool sewage suction robot. When the pool sewage suction robot touches the pool wall or gets stuck by obstacles (such as a water inlet, a sewage outlet, or steps) in the pool, it is required to control a steering apparatus installed on the pool sewage suction robot to adjust the moving direction of the pool sewage suction robot.

However, when cleaning different pools, the steering apparatus of the pool sewage suction robot may be influenced by terrain variations, size constraints, and water currents, which makes it difficult for the steering apparatus to accurately determine the operating state of the pool sewage suction robot, and makes it unable to make adjustments in response to errors or the halted state of the pool sewage suction robot in time, and thus reduces the pool cleaning efficiency of the pool sewage suction robot.

In view of the problems existing in the above related technologies, the present disclosure proposes a method and an apparatus for controlling a steering apparatus of a pool cleaning robot to improve accuracy of time delay estimation.

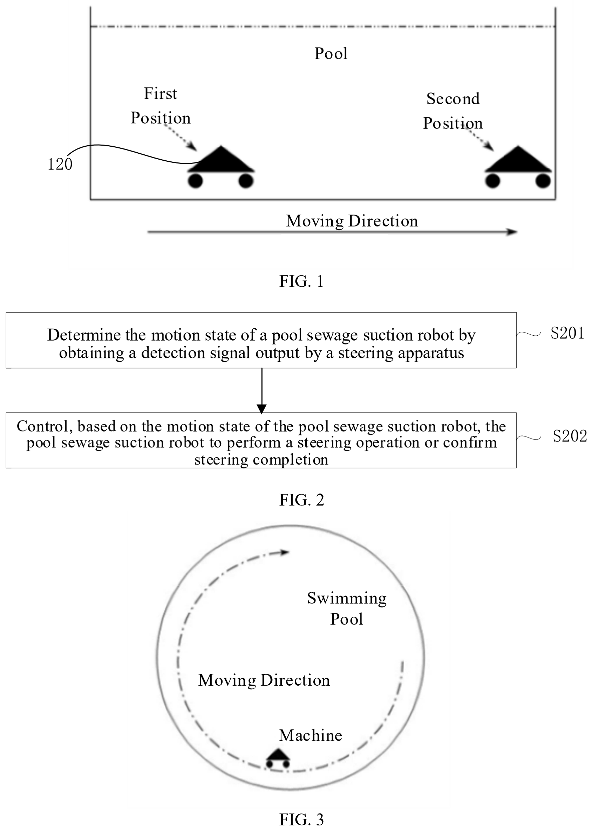

FIG. 1 shows a schematic diagram of an application scenario of a method for controlling a steering apparatus of a pool sewage suction robot according to an embodiment of the present disclosure.

The technical solutions provided in the embodiments of the present disclosure can be applied to the scenario of cleaning a pool by a pool sewage suction robot. Referring to FIG. 1, the pool sewage suction robot 120 cleans a pool wall of the pool, and the pool sewage suction robot 120 moves from a first position to a second position. A robot controller determines a motion state of the pool sewage suction robot by obtaining a detection signal output by the steering apparatus of the pool sewage suction robot 120, and controls, based on the motion state of the pool sewage suction robot, the pool sewage suction robot to perform a steering operation or confirm steering completion. That is, the robot controller determines the current motion state of the pool sewage suction robot by means of the detection signal, and then controls the steering apparatus to adjust the current motion state of the pool sewage suction robot, avoiding the pool sewage suction robot from being in the same motion state for a long time. In this way, the pool cleaning efficiency of the pool sewage suction robot can be improved to a certain extent.

FIG. 2 shows a flowchart of the method for controlling a steering apparatus of a pool sewage suction robot according to an embodiment of the present disclosure. The method for controlling a steering apparatus of a pool sewage suction robot may be executed by a computing device with computing and processing functions, such as the robot controller mentioned above. Taking an example where the method is executed by the robot controller, the method for controlling a steering apparatus of a pool sewage suction robot in the exemplary embodiment will be described in detail below with reference to the accompanying drawings.

Referring to FIG. 2, the method for controlling a steering apparatus of a pool sewage suction robot includes Steps S201 to S202. In the Step 201, the motion state of the pool sewage suction robot is determined by obtaining the detection signal output by the steering apparatus.

In some embodiments, the detection signal output by the steering apparatus is an electrical signal output by a detection circuit. As a built-in circuit of the robot controller, the detection circuit is configured to cooperate with the steering apparatus to output the detection signal for the pool sewage suction robot during the operating process. The detection signal output by the steering apparatus includes a first signal and a second signal (for example, the first signal represents a high level and the second signal represents a low level). In some embodiments, the pool in the embodiments of the present disclosure includes a swimming pool.

The motion state of the pool sewage suction robot includes a first state and a second state. The first signal is configured for indicating that the pool sewage suction robot is in the first state, and the running speed of the pool sewage suction robot in the first state is not equal to zero. The second signal is configured for indicating that the pool sewage suction robot is in the second state, and the running speed of the pool sewage suction robot in the second state is zero.

The robot controller determines the motion state of the pool sewage suction robot by obtaining the detection signal output by the steering apparatus.

In some embodiments, the robot controller determines whether the pool sewage suction robot is in the first state or the second state by determining whether the obtained detection signal output by the steering apparatus is the first signal or the second signal.

In the Step S202, the robot controller controls, based on the motion state of the pool sewage suction robot, the pool sewage suction robot to perform the steering operation or confirm steering completion.

In some embodiments, in combination with the above exemplary embodiment, the motion state is either the first state or the second state. That is, the running speed of the pool sewage suction robot is not equal to zero, or the running speed of the pool sewage suction robot is zero.

After determining whether the pool sewage suction robot is in the first state or the second state, the robot controller controls the pool sewage suction robot to perform the steering operation or confirm steering completion.

To provide a clearer explanation of the above exemplary implementation, the above implementation will be described in detail below in two parts.

**In** the first part, the robot controller obtains the detection signal output by the steering apparatus, and the robot controller controls, based on the detection signal, the pool sewage suction robot to perform the steering operation, including at least the following three cases.

**In** the first case, the robot controller obtains the detection signal output by the steering apparatus, and the robot controller controls the pool sewage suction robot to perform the steering operation when it is monitored that the detection signal is the first signal and remains as the first signal for a first preset duration.

**In** some embodiments, in combination with the above embodiments, the detection signal is the electrical signal output by the detection circuit, and the first signal is a high level signal, and is configured for indicating that the pool sewage suction robot is in the first state. The running speed of the pool sewage suction robot in the first state is not equal to zero.

**In** some embodiments, when the pool sewage suction robot is in the first state and the robot controller monitors that the steering apparatus continuously outputs the first signal within the first preset duration, the robot controller controls the pool sewage suction robot to perform the steering operation.

In some embodiments, referring to FIG. 3, when cleaning a pool, the pool sewage suction robot maintains the first state within the first preset duration to repeatedly clean the pool. In this case, the robot controller may control the pool sewage suction robot to perform the steering operation, which can effectively avoid repeated cleaning and thus improve the cleaning efficiency.

In some embodiments, when the pool sewage suction robot completes the steering operation, and the robot controller monitors that the detection signal is changed from the second signal to the first signal and then the first signal is continuously output within the first preset duration, the robot controller controls the pool sewage suction robot to perform the steering operation.

In some embodiments, referring to FIG. 3 again, when the pool sewage suction robot is cleaning the pool, after the steering operation is completed, the detection signal is changed from the second signal to the first signal, that is, the pool sewage suction robot is changed from the second state to the first state, and the pool sewage suction robot maintains the first state within the first preset duration to repeatedly clean the pool. In this case, the robot controller may control the pool sewage suction robot to perform the steering operation, which can effectively avoid repeated cleaning caused by the damage of the steering apparatus and thus further improve the cleaning efficiency.

In the second case, the robot controller obtains the detection signal output by the steering apparatus, and the robot controller controls the pool sewage suction robot to perform the steering operation when it is monitored that the detection signal is the second signal and remains as the second signal for a second preset duration.

In some embodiments, in combination with the above embodiments, the second signal is a low level signal, which is used to indicate that the pool sewage suction robot is in the second state. The second state is a static state, or in other words, the running speed of the pool cleaning robot is zero in the second state.

In some embodiments, when the pool sewage suction robot is in the second state and the robot controller monitors that the steering apparatus continuously outputs the second signal within the second preset duration, the robot controller controls the pool sewage suction robot to perform the steering operation.

In some embodiments, when the pool sewage suction robot touches the pool wall or gets stuck by obstacles (such as a water inlet, a sewage outlet, or steps) in the pool, the running speed of the pool cleaning robot is zero within the second preset duration. In this case, the robot controller controls the pool sewage suction robot to perform the steering operation.

In some embodiments, after the pool sewage suction robot completes the steering operation, the detection signal fails to change from the second signal to the first signal, and then the second signal is continuously output within the second preset duration.

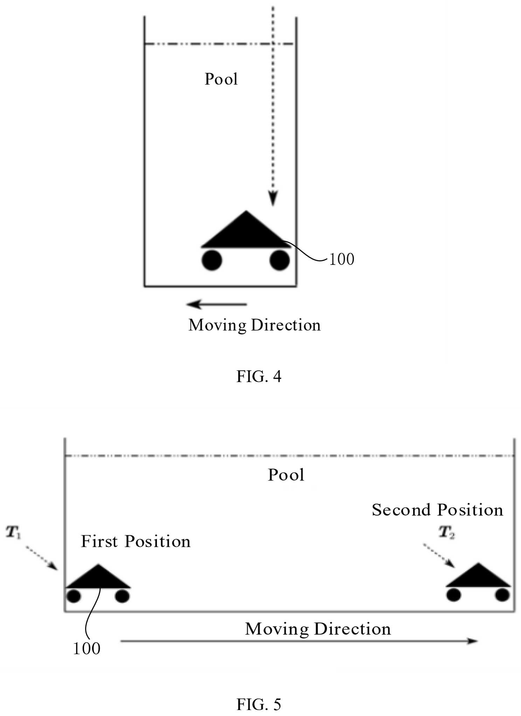

In some embodiments, referring to FIG. 4 (for example, in a narrower area of a pool path), the pool sewage suction robot 120 completes the steering operation, and the robot controller monitors that the detection signal fails to change from the second signal to the first signal, that is, the pool sewage suction robot fails to change from the second state to the first state, and the pool sewage suction robot maintains the second state within the second preset duration. In this case, the robot controller assumes by default that the pool sewage suction robot gets stuck here, so the robot controller controls the steering apparatus to perform the steering operation again.

In the third case, the robot controller obtains the detection signal output by the steering apparatus, and monitors that the detection signal is changed from the first signal to the second signal and remains as the second signal for a third preset duration. In this case, the robot controller controls the pool sewage suction robot to perform the steering operation.

In some embodiments, referring to FIG. 5, the pool sewage suction robot moves from the first position to the second position, and the robot controller monitors that the detection signal is changed from the first signal to the second signal, that is, the pool sewage suction robot is changed from the first state to the second state, and the second state lasts for the third preset duration. In this case, the robot controller controls the pool sewage suction robot to perform the steering operation.

In the second part, the robot controller confirms the steering completion when the detection signal is changed from the second signal to the first signal and the first signal is continuously output within a fourth preset duration after the steering operation is performed.

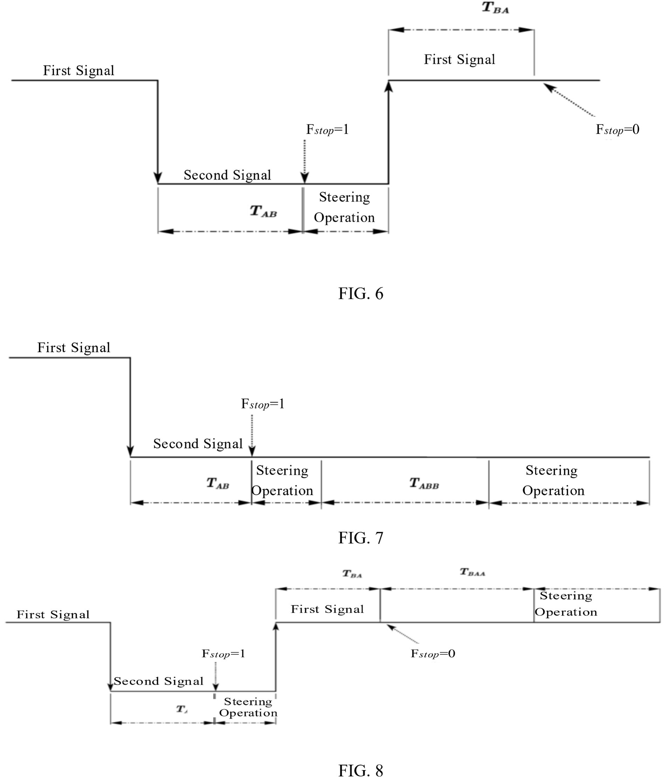

In some embodiments, referring to FIG. 5 and FIG. 6, taking the third case as an example, a description is made below in combination with the above embodiments. When the pool sewage suction robot moves from the first position to the second position, and the robot controller monitors that the detection signal is changed from the first signal to the second signal and remains as the second signal for the third preset duration *T_{AB},* the robot controller changes a process flag bit from an initial value of 0 to a target value of 1, that is, *Fₛₜₒₚ*=1, to determine that the pool sewage suction robot is in the second state. When the pool sewage suction robot is in the second state, the robot controller controls the steering apparatus to perform the steering operation. Afterwards, when the robot controller monitors that the detection signal is changed from the second signal to the first signal and remains as the first signal for the fourth preset duration *T_{BA}*, the robot controller changes the process flag bit from the target value of 1 to the initial value of 0, that is, *Fₛₜₒₚ*=0, to determine that the pool sewage suction robot is in the first state, that is, the robot controller confirms the steering completion.

It should be noted that in the embodiments of the present disclosure, as a definition of one parameter in a computer program by a developer during a development phase, the process flag bit is used for characterizing the variation mapping of the motion state of the pool sewage suction robot when the robot controller monitors that the detection signal is changed from the first signal to the second signal or from the second signal to the first signal.

In some embodiments, referring to FIG. 7, when the pool sewage suction robot is in the second state, the robot controller controls the steering apparatus to perform the steering operation. When the second signal remains unchanged within the duration *T_{ABB}* , it is determined that the steering operation of the pool sewage suction robot has failed. In this case, the robot controller controls the pool sewage suction robot to perform the steering operation again.

In some embodiments, referring to FIG. 8, after the robot controller confirms the completion of the steering operation, the first signal is maintained within the duration *T_{BAA}* , and the robot controller controls the pool sewage suction robot to perform the steering operation.

According to the technical solutions in the exemplary embodiment of FIG. 2, the robot controller determines the motion state of the pool sewage suction robot by obtaining the detection signal output by the steering apparatus of the pool sewage suction robot, and controls, based on the motion state of the pool sewage suction robot, the pool sewage suction robot to perform the steering operation or confirm steering completion. That is, the robot controller determines the current motion state of the pool sewage suction robot by means of the detection signal, and then controls the steering apparatus to adjust the current motion state of the pool sewage suction robot, avoiding the pool sewage suction robot from being in the same motion state for a long time. In this way, the pool cleaning efficiency of the pool sewage suction robot can be improved to a certain extent.

In addition, in one aspect, by monitoring the duration of the first signal, the duration of the second signal, and the transition duration from the first signal to the second signal, the robot controller can reduce external interference on the detection signal, and improve the accuracy of determining the detection signal, thereby improving the accuracy of determining the current operating state of the pool sewage suction robot. In another aspect, the robot controller determines whether the pool sewage suction robot has completed the steering operation by monitoring the detection signal, which can effectively prevent extended dwell time of the pool sewage suction robot in a narrower area, and thus improving the working efficiency of the pool sewage suction robot.

In some embodiments, the method also includes: obtaining a timestamp T1 when the detection signal is changed from the second signal to the first signal; obtaining a timestamp T2 when the detection signal is changed from the first signal to the second signal; and determining an environmental walking length for the pool sewage suction robot based on the timestamp T1, the timestamp T2, and the speed of the pool sewage suction robot.

In some embodiments, referring to FIG. 5 again, in combination with the above embodiments, when the pool sewage suction robot 120 is in the first position, the robot controller monitors that the detection signal is changed from the second signal to the first signal, and records the time as the timestamp T1, and the robot controller controls the steering apparatus to perform the steering operation. When the pool sewage suction robot completes the steering operation and moves to the second position, the robot controller monitors that the detection signal is changed from the first signal to the second signal, and records the time as the timestamp T2. A time difference between the timestamp T1 and the timestamp T2 is determined, that is, the time required for the pool sewage suction robot to move from the first position to the second position is determined. Next, the time difference is multiplied by the speed of the pool sewage suction robot to determine the environmental walking length for the pool sewage suction robot. In this way, manual measurement can be avoided when determining the perimeter or the length of the pool cleaned by the pool sewage suction robot, making it simple and efficient.

It should be noted that the speed of the pool sewage suction robot is a preset running speed during the development phase or a user-defined running speed. In the embodiments of the present disclosure, the preset running speed during the development phase is used, which is 15 to 25 m/s. This embodiment does not impose restrictions on the user-defined running speed.

In some embodiments, the method also includes: after the pool sewage suction robot completes the steering operation, obtaining delay time from the performance of the steering operation by the steering apparatus to the change of the detection signal from the second signal to the first signal; and determining whether the pool sewage suction robot is currently in an uphill state or a downhill state based on the delay time and preset delay time.

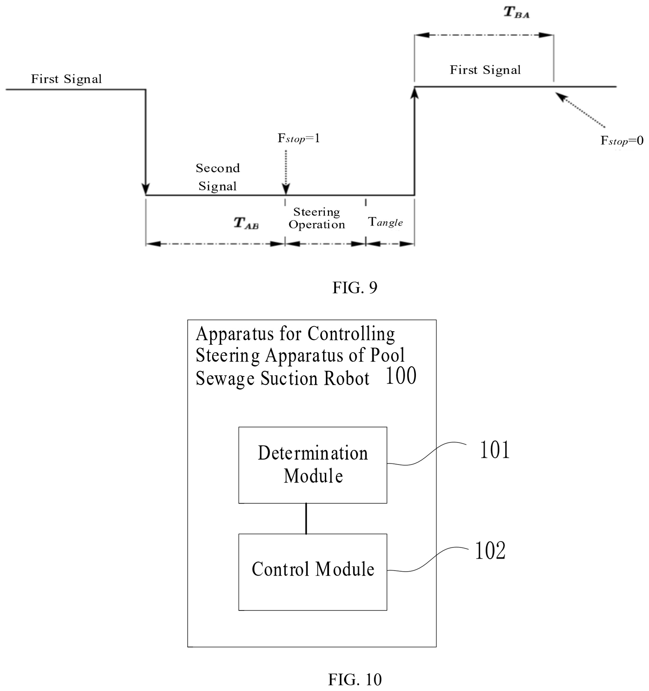

In some embodiments, referring to FIG. 9, taking the third case as an example, after the robot controller controls the steering apparatus to perform the steering operation, the pool sewage suction robot may move in a direction away from the pool wall. The robot controller records the delay time *T_{angle}* from the completion of the steering of the pool sewage suction robot to the change of the detection signal from the second signal to the first signal. The robot controller determines whether the pool sewage suction robot is currently in the uphill state or the downhill state based on a magnitude relationship between the delay time *T_{angle}* and the preset delay time. That is, when the delay time *T_{angle}* is greater than the preset delay time, the pool sewage suction robot is currently in the uphill state. When the delay time *T_{angle}* is less than the preset delay time, the pool sewage suction robot is currently in the downhill state.

It should be noted that in this embodiment, the preset delay time is the time required from the completion of the steering of the pool sewage suction robot to the change of the detection signal from the second signal to the first signal when the pool wall is horizontal. The embodiments of the present disclosure do not impose restrictions on the preset delay time. In the embodiments of the present disclosure, by measuring the delay time *Tangle,* the accuracy of determining the detection signal by the robot controller can be improved, thereby improving the accuracy of determining the current operating state of the pool sewage suction robot.

The following embodiments are apparatus embodiments of the present disclosure, which may be used for executing the method embodiments of the present disclosure. Reference is made to the method embodiments of the present disclosure for undisclosed details about the apparatus embodiments of the present disclosure.

FIG. 10 shows a structural diagram of an apparatus for controlling a steering apparatus of a pool sewage suction robot according to an embodiment of the present disclosure.

The apparatus 100 for controlling a steering apparatus of a pool sewage suction robot in the embodiments of the present disclosure includes a determination module 101 and a control module 102.

The determination module 101 is configured to determine a motion state of the pool sewage suction robot by obtaining a detection signal output by the steering apparatus.

The control module 102 is configured to control, based on the motion state of the pool sewage suction robot, the pool sewage suction robot to perform a steering operation or confirm steering completion.

In some embodiments, the detection signal output by the steering apparatus is an electrical signal output by a detection circuit.

In some embodiments, the detection signal output by the steering apparatus includes a first signal and a second signal, where the first signal is configured for indicating that the pool sewage suction robot is in a first state, and the second signal is configured for indicating that the pool sewage suction robot is in a second state.

In some embodiments, the running speed of the pool sewage suction robot in the first state is not equal to zero; and the running speed of the pool sewage suction robot in the second state is zero.

In some embodiments, the apparatus 100 for controlling a steering apparatus of a pool sewage suction robot is further configured to: obtain the detection signal output by the steering apparatus; and control, based on the detection signal, the pool sewage suction robot to perform the steering operation in a case of: (i) monitoring that the detection signal is the first signal and remains as the first signal for a first preset duration; or (ii) monitoring that the detection signal is the second signal and remains as the second signal for a second preset duration; or (iii) monitoring that the detection signal is changed from the first signal to the second signal and remains as the second signal for a third preset duration.

In some embodiments, the case of monitoring that the detection signal is the first signal and remains as the first signal for the first preset duration includes: a case where the pool sewage suction robot is in the first state, and the steering apparatus continuously outputs the first signal within the first preset duration; or a case where the pool sewage suction robot completes the steering operation, the detection signal is changed from the second signal to the first signal, and then the first signal is continuously output within the first preset duration.

In some embodiments, the case of monitoring that the detection signal is the second signal and remains as the second signal for the second preset duration includes: a case where the pool sewage suction robot is in the second state, and the steering apparatus continuously outputs the second signal within the second preset duration; or a case where the pool sewage suction robot completes the steering operation, the detection signal fails to change from the second signal to the first signal, and then the second signal is continuously output within the second preset duration.

In some embodiments, the apparatus 100 for controlling a steering apparatus of a pool sewage suction robot is further configured to confirm steering completion when the detection signal is changed from the second signal to the first signal and the first signal is continuously output within a fourth preset duration after the steering operation is performed.

In some embodiments, 102: control the pool cleaning robot to perform the steering operation when the pool cleaning robot is in the second state; and control the pool cleaning robot to perform the steering operation again when it is monitored that the detection signal is the second signal and remains as the second signal for a fifth preset duration.

In some embodiments, the apparatus 100 for controlling a steering apparatus of a pool sewage suction robot is further configured to: control the pool cleaning robot to perform the steering operation when the first signal is monitored and lasts for a sixth preset duration.

In some embodiments, the apparatus 100 for controlling a steering apparatus of a pool sewage suction robot is further configured to: obtain a timestamp T1 when the detection signal is changed from the second signal to the first signal; obtain a timestamp T2 when the detection signal is changed from the first signal to the second signal; and determine an environmental walking length for the pool sewage suction robot based on the timestamp T1, the timestamp T2, and the speed of the pool sewage suction robot.

In some embodiments, the apparatus 100 for controlling a steering apparatus of a pool sewage suction robot is further configured to: after the pool sewage suction robot completes the steering operation, obtain delay time from the performance of the steering operation by the steering apparatus to the change of the detection signal from the second signal to the first signal; and determine whether the pool sewage suction robot is currently in an uphill state or a downhill state based on the delay time and preset delay time.

It should be explained that, when the apparatus for controlling a steering apparatus of a pool sewage suction robot provided by the above embodiments performs the method for controlling a steering apparatus of a pool sewage suction robot, the above divided respective function modules are described as an example. In actual applications, the above allocated functions may be implemented by different function modules according to actual needs, that is, the inner structure of the device may be divided into different function modules to implement part or all of the functions described as above. In addition, the apparatus for controlling a steering apparatus of a pool sewage suction robot provided by the above embodiments belongs to the same conception as the method for controlling a steering apparatus of a pool sewage suction robot. Therefore, reference is made to the embodiments of the method for controlling a steering apparatus of a pool sewage suction robot for details not disclosed in the apparatus embodiments of the present disclosure, which are not to be described in detail here.

Sequence numbers of the embodiments of the present disclosure are merely for description, and do not represent advantages or disadvantages of the embodiments.

The embodiments of the present disclosure also provide a computer-readable storage medium having stored a computer program thereon, where the computer program is executable by a processor to perform the steps of the method in any one of the aforementioned embodiments. The computer-readable storage medium may include, but is not limited to any type of disks, including floppy disks, optical disks, DVD, CD-ROM, microdrives and magnetooptical disks, ROM, RAM, EPROM, EEPROM, DRAM, VRAM, flash memory devices, magnetic or optical cards, nanosystems (including molecular memory ICs), or any type of media or devices suitable for storing commands and/or data.

The embodiments of the present disclosure also provide a steering device for a pool sewage suction robot. The steering device includes a memory, a processor, and a computer program stored on the memory and executable by the processor. When the processor executes the computer program, the steps of the method in any one of the aforementioned embodiments are performed.

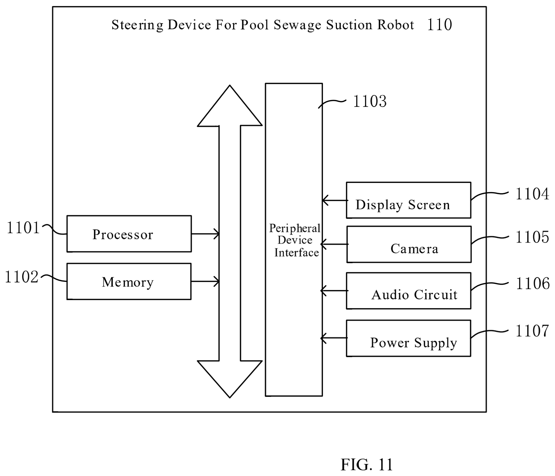

FIG. 11 shows a structural diagram of a steering device for a pool sewage suction robot according to an embodiment of the present disclosure. Referring to FIG. 11, the steering device 110 for the pool sewage suction robot includes a processor 1101 and a memory 1102.

In the embodiments of the present disclosure, the processor 1101 is a control center of a computer system, which may be a processor of a physical machine or a processor of a virtual machine. The processor 1101 may include one or more processing cores, such as a quad-core processor or an octa-core processor. The processor 1101 may be implemented in at least one hardware form, including Digital Signal Processing (DSP), Field-Programmable Gate Array (FPGA), and Programmable Logic Array (PLA). The processor 1101 may also include a main processor and a coprocessor. The main processor is a processor used for processing data in an awake state, and is also known as a Central Processing Unit (CPU). The coprocessor is a low power processor used for processing data in a standby state.

In some embodiments, the processor 1101 is specifically configured to: determine a motion state of the pool sewage suction robot by obtaining a detection signal output by the steering apparatus; and control, based on the motion state of the pool sewage suction robot, the pool sewage suction robot to perform a steering operation or confirm steering completion.

In some embodiments, the detection signal output by the steering apparatus is an electrical signal output by a detection circuit.

In some embodiments, the detection signal output by the steering apparatus includes a first signal and a second signal. The first signal is configured for indicating that the pool sewage suction robot is in a first state.

The second signal is configured for indicating that the pool sewage suction robot is in a second state.

In some embodiments, the running speed of the pool sewage suction robot in the first state is not equal to zero; and the running speed of the pool sewage suction robot in the second state is zero.

In some embodiments, the processor 1101 is also specifically configured to: obtain the detection signal output by the steering apparatus; and control, based on the detection signal, the pool sewage suction robot to perform the steering operation in a case of: (i) monitoring that the detection signal is the first signal and remains as the first signal for a first preset duration; or (ii) monitoring that the detection signal is the second signal and remains as the second signal for a second preset duration; or (iii) monitoring that the detection signal is changed from the first signal to the second signal and remains as the second signal for a third preset duration.

In some embodiments, the case of monitoring that the detection signal is the first signal and remains as the first signal for the first preset duration includes: a case where the pool sewage suction robot is in the first state, and the steering apparatus continuously outputs the first signal within the first preset duration; or a case where the pool sewage suction robot completes the steering operation, the detection signal is changed from the second signal to the first signal, and then the first signal is continuously output within the first preset duration.

In some embodiments, the case of monitoring that the detection signal is the second signal and remains as the second signal for the second preset duration includes: a case where the pool sewage suction robot is in the second state, and the steering apparatus continuously outputs the second signal within the second preset duration; or a case where the pool sewage suction robot completes the steering operation, the detection signal fails to change from the second signal to the first signal, and then the second signal is continuously output within the second preset duration.

In some embodiments, the processor 1101 is also specifically configured to confirm completion of the steering operation when the detection signal is changed from the second signal to the first signal and the first signal is continuously output within a fourth preset duration after the steering operation is performed.

In some embodiments, the processor 1101 is also specifically configured to: control the pool cleaning robot to perform the steering operation when the pool cleaning robot is in the second state; and control the pool cleaning robot to perform the steering operation again when it is monitored that the detection signal is the second signal and remains as the second signal for a fifth preset duration.

In some embodiments, the processor 1101 is also specifically configured to control the pool cleaning robot to perform the steering operation when the first signal is monitored and lasts for a sixth preset duration.

In some embodiments, the processor 1101 is also specifically configured to: obtain a timestamp T1 when the detection signal is changed from the second signal to the first signal; obtain a timestamp T2 when the detection signal is changed from the first signal to the second signal; and determine an environmental walking length for the pool sewage suction robot based on the timestamp T1, the timestamp T2, and the speed of the pool sewage suction robot.

In some embodiments, the processor 1101 is also specifically configured to: after the pool sewage suction robot completes the steering operation, obtain delay time from the performance of the steering operation by the steering apparatus to the change of the detection signal from the second signal to the first signal; and determine whether the pool sewage suction robot is currently in an uphill state or a downhill state based on the delay time and preset delay time.

The memory 1102 may include one or more computer-readable storage media, which may be non-transitory. The memory 1102 may also include a high-speed random access memory, and a non-volatile memory such as one or more disk storage terminals or flash storage terminals. In some embodiments of the present disclosure, the non-transitory computer-readable storage media in the memory 1102 are used for storing at least one command executable by the processor 1101 to perform the method in the embodiments of the present disclosure.

In some embodiments, the steering device 110 for the pool sewage suction robot also includes a steering device interface 1103 for a peripheral pool sewage suction robot and at least one peripheral terminal. The processor 1101, the memory 1102, and the steering device interface 1103 for the peripheral pool sewage suction robot may be connected through a bus or a signal line. Each peripheral terminal may be connected to the peripheral terminal interface 1103 through a bus, a signal line, or a circuit board. Specifically, the peripheral terminal includes at least one of a display screen 1104, a camera 1105, and an audio circuit 1106.

The steering device interface 1103 for the peripheral pool sewage suction robot may be configured to connect at least one peripheral terminal related to input/output (I/O) to the processor 1101 and the memory 1102. In some embodiments of the present disclosure, the processor 1101, the memory 1102, and the peripheral terminal interface 1103 are integrated on the same chip or circuit board. In some other embodiments of the present disclosure, any one or two of the processor 1101, the memory 1102, and the peripheral terminal interface 1103 may be implemented on separate chips or circuit boards. The embodiments of the present disclosure do not impose restrictions on this.

The display screen 1104 is configured to display a user interface (UI). The UI may include graphics, texts, icons, videos, and any combination thereof. When the display screen 1104 is a touch screen, the display screen 1104 also is able to acquire a touch signal on or above a surface of the display screen 1104. The touch signal may be inputted as a control signal to the processor 1101 for processing. In this case, the display screen 1104 may also be configured to provide virtual buttons and/or virtual keyboards, which are also referred to as soft buttons and/or soft keyboards. In some embodiments of the present disclosure, one display screen 1104 may be arranged on a front panel of the steering device 110 for the pool sewage suction robot. In some other embodiments of the present disclosure, at least two display screens 1104 may be respectively arranged on different surfaces of the steering device 110 for the pool sewage suction robot or in a folded design. In still some other embodiments of the present disclosure, the display screen 1104 may be a flexible display screen, which is arranged on a curved or folded surface of the steering device 110 for the pool sewage suction robot. Even the display screen 1104 may be designed to be a non-rectangular irregular shape, i.e. a special-shaped screen. The display screen 1104 may be formed as a Liquid Crystal Display (LCD) or formed by Organic Light-Emitting Diodes (OLED), etc.

The camera 1105 is configured to capture images or videos. Alternatively, the camera 1105 includes a front camera and a rear camera. Generally, the front camera is arranged on the front panel of the steering device 110 for the pool sewage suction robot, and the rear camera is arranged on the rear panel of the steering device 110 for the pool sewage suction robot. In some embodiments, there are at least two rear cameras, which may be respectively a main camera, and any one of a depth of field camera, a wide-angle camera, and a telephoto camera, to achieve background blurring function based on fusion of the main camera and the depth of field camera, and to achieve panoramic shooting and virtual reality (VR) shooting functions based on the fusion of the main camera and the wide-angle camera, or other fusion shooting functions. In some embodiments of the present disclosure, the camera 1105 may also include a flash lamp. The flash lamp may be a monochromatic temperature flash lamp or a bichromatic temperature flash lamp. The bichromatic temperature flash lamp refers to a combination of a warm light flash lamp and a cool light flash lamp, which may be used for light compensation at different color temperatures.

The audio circuit 1106 may include a microphone and a speaker. The microphone is configured to acquire sound waves from the users and the environment, and convert the sound waves into electrical signals that are inputted to the processor 1101 for processing. For the purpose of stereo acquisition or noise reduction, a plurality of microphones may be arranged in different locations of the steering device 110 for the pool sewage suction robot. The microphones may also be array microphones or omnidirectional acquisition microphones.

A power supply 1107 is configured to supply power to various components in the steering device 110 for the pool sewage suction robot. The power supply 1107 may be an AC battery, a DC battery, a disposable battery, or a rechargeable battery. When the power supply 1107 is the rechargeable battery, the rechargeable battery may be a wired rechargeable battery or a wireless rechargeable battery. The wired rechargeable battery is a battery charged through wired lines, and the wireless rechargeable battery is a battery charged through wireless coils. The rechargeable battery may also support fast charging technology.

The structural block diagram of the steering device 110 for the pool sewage suction robot shown in the embodiments of the present disclosure does not constitute a limitation on the steering device 110 for the pool sewage suction robot. The steering device 110 for the pool sewage suction robot may include more or fewer components than shown in the figures, or combine some components, or adopt different component layouts.

In the present disclosure, terms "first", "second", etc. are merely for description purposes, and are not construed as indicating or implying relative importance or order; and the term "a plurality of" refers to two or more, unless otherwise specified. Terms such as "installation", "interconnection", "connection" or "fixation" should be understood in a broad sense. For example, the "connection" may be a fixed connection, a detachable connection or integrated connection; and the "interconnection" may be a direct interconnection or indirect interconnection by means of an intermediary. The specific significations of the above terms in the present disclosure may be understood in the light of specific conditions by persons of ordinary skill in the art.

In the description of the present disclosure, it is to be understood that the orientations or position relationships represented by the terms of "up", "down" and the like are based on the orientation or position relationships shown in the accompanying figures, they are merely for ease of a description of the present disclosure and a simplified description instead of being intended to indicate or imply the apparatus or unit to have a special orientation or to be configured and operated in a special orientation. Thus, they cannot be understood as limiting of the present disclosure.

The above is merely specific embodiments of the present disclosure, but the protection scope of the present disclosure is not limited thereto. Any variation or substitution easily conceivable to those skilled in the art shall fall into the protection scope of the present disclosure. Therefore, the equivalent variations made according to the claims of the present disclosure still fall within the scope of the present disclosure.

## Claims

1. A method for controlling a steering apparatus of a pool cleaning robot, the method comprising:
determining a motion state of the pool cleaning robot by obtaining a detection signal output by the steering apparatus; and
controlling, based on the motion state of the pool cleaning robot, the pool cleaning robot to perform a steering operation or confirm steering completion.

2. The method according to claim 1, wherein the detection signal output by the steering apparatus is an electrical signal output by a detection circuit.

3. The method according to claim 1 or 2, wherein the detection signal output by the steering apparatus comprises a first signal and a second signal;
the first signal is configured for indicating that the pool cleaning robot is in a first state;
the second signal is configured for indicating that the pool cleaning robot is in a second state; and
running speed of the pool cleaning robot in the first state is not equal to zero; and running speed of the pool cleaning robot in the second state is zero.

4. The method according to claim 3, comprising:
obtaining the detection signal output by the steering apparatus; and
controlling, based on the detection signal, the pool cleaning robot to perform the steering operation in a case of:
(i) monitoring that the detection signal is the first signal and remains as the first signal for a first preset duration; or
(ii) monitoring that the detection signal is the second signal and remains as the second signal for a second preset duration; or
(iii) monitoring that the detection signal is changed from the first signal to the second signal and remains as the second signal for a third preset duration.

5. The method according to claim 4, wherein the case of monitoring that the detection signal is the first signal and remains as the first signal for the first preset duration comprises:
a case where the pool cleaning robot is in the first state, and the steering apparatus continuously outputs the first signal within the first preset duration; or
a case where the pool cleaning robot completes the steering operation, the detection signal is changed from the second signal to the first signal, and then the first signal is continuously output within the first preset duration.

6. The method according to claim 4, wherein the case of monitoring that the detection signal is the second signal and remains as the second signal for the second preset duration comprises:
a case where the pool cleaning robot is in the second state, and the steering apparatus continuously outputs the second signal within the second preset duration; or
a case where the pool cleaning robot completes the steering operation, the detection signal fails to change from the second signal to the first signal, and then the second signal is continuously output within the second preset duration.

7. The method according to claim 4, comprising:
confirming the steering completion when:
the detection signal is changed from the second signal to the first signal and the first signal is continuously output within a fourth preset duration after the steering operation is performed.

8. The method according to claim 4, wherein controlling, based on the motion state of the pool cleaning robot, the pool cleaning robot to perform the steering operation comprises:
controlling the pool cleaning robot to perform the steering operation when the pool cleaning robot is in the second state; and
controlling the pool cleaning robot to perform the steering operation again when it is monitored that the detection signal is the second signal and remains as the second signal for a fifth preset duration.

9. The method according to claim 4, wherein after controlling the pool cleaning robot to confirm the steering completion, the method further comprises:
controlling the pool cleaning robot to perform the steering operation when the first signal is monitored and lasts for a sixth preset duration.

10. The method according to claim 4, further comprising:
obtaining a timestamp T1 when the detection signal is changed from the second signal to the first signal;
obtaining a timestamp T2 when the detection signal is changed from the first signal to the second signal; and
determining an environmental walking length for the pool cleaning robot based on the timestamp T1, the timestamp T2, and the speed of the pool cleaning robot.

11. The method according to claim 4, further comprising:
after the pool cleaning robot completes the steering operation, obtaining delay time from performance of the steering operation by the steering apparatus to a change of the detection signal from the second signal to the first signal; and
determining whether the pool cleaning robot is currently in an uphill state or a downhill state based on the delay time and preset delay time.

12. An apparatus for controlling a steering apparatus of a pool cleaning robot, the apparatus comprising:
an obtaining module configured to obtain a detection signal output by the steering apparatus by means of a detection circuit, the detection signal being a first signal or a second signal, the first signal being configured for indicating that the pool cleaning robot is in a first state, and the second signal being configured for indicating that the pool cleaning robot is in a second state;
a steering module configured to control the steering apparatus to perform a steering operation when it is monitored that the detection signal is changed from the first signal to the second signal and remains as the second signal for a first preset duration; and
a determination module configured to determine that the pool cleaning robot has completed the steering operation when it is monitored that the detection signal is changed from the second signal to the first signal and remains as the first signal for a second preset duration.

13. The apparatus according to claim 12, wherein the detection signal output by the steering apparatus is an electrical signal output by the detection circuit.

14. The apparatus according to claim 12 or 13, wherein the detection signal output by the steering apparatus comprises the first signal and the second signal; the first signal is configured for indicating that the pool cleaning robot is in a first state; the second signal is configured for indicating that the pool cleaning robot is in a second state; running speed of the pool cleaning robot in the first state is not equal to zero; and running speed of the pool cleaning robot in the second state is zero.

15. The apparatus according to claim 14, further configured to:
obtain the detection signal output by the steering apparatus; and
control, based on the detection signal, the pool cleaning robot to perform the steering operation in a case of:
(i) monitoring that the detection signal is the first signal and remains as the first signal for a first preset duration; or
(ii) monitoring that the detection signal is the second signal and remains as the second signal for a second preset duration; or
(iii) monitoring that the detection signal is changed from the first signal to the second signal and remains as the second signal for a third preset duration.

16. The apparatus according to claim 15, wherein the case of monitoring that the detection signal is the first signal and remains as the first signal for the first preset duration comprises:
a case where the pool cleaning robot is in the first state, and the steering apparatus continuously outputs the first signal within the first preset duration; or
a case where the pool cleaning robot completes the steering operation, the detection signal is changed from the second signal to the first signal, and then the first signal is continuously output within the first preset duration.

17. The apparatus according to claim 15, wherein the case of monitoring that the detection signal is the second signal and remains as the second signal for the second preset duration comprises:
a case where the pool cleaning robot is in the second state, and the steering apparatus continuously outputs the second signal within the second preset duration; or
a case where the pool cleaning robot completes the steering operation, the detection signal fails to change from the second signal to the first signal, and then the second signal is continuously output within the second preset duration.

18. The apparatus according to claim 15, further configured to:
confirm steering completion when:
the detection signal is changed from the second signal to the first signal and the first signal is continuously output within a fourth preset duration after the steering operation is performed.

19. The apparatus according to claim 15, wherein the control module is specifically configured to:
control the pool cleaning robot to perform the steering operation when the pool cleaning robot is in the second state; and
control the pool cleaning robot to perform the steering operation again when it is monitored that the detection signal is the second signal and remains as the second signal for a fifth preset duration.

20. The apparatus according to claim 15, wherein after controlling the pool cleaning robot to confirm steering completion, the apparatus is further configured to:
control the pool cleaning robot to perform the steering operation when the first signal is monitored and lasts for a sixth preset duration.

21. The apparatus according to claim 15, further configured to:
obtain a timestamp T1 when the detection signal is changed from the second signal to the first signal;
obtain a timestamp T2 when the detection signal is changed from the first signal to the second signal; and
determine an environmental walking length for the pool cleaning robot based on the timestamp T1, the timestamp T2, and the speed of the pool cleaning robot.

22. The apparatus according to claim 15, further configured to:
after the pool cleaning robot completes the steering operation, obtain delay time from performance of the steering operation by the steering apparatus to a change of the detection signal from the second signal to the first signal; and
determine whether the pool cleaning robot is currently in an uphill state or a downhill state based on the delay time and preset delay time.

23. A steering device for a pool cleaning robot, wherein the steering device comprises:
a memory, a processor, and a computer program stored on the memory and executable by the processor, wherein the processor executes the computer program to:
determine a motion state of the pool cleaning robot by obtaining a detection signal output by a steering apparatus; and
control, based on the motion state of the pool cleaning robot, the pool cleaning robot to perform a steering operation or confirm steering completion.

24. A computer-readable storage medium having stored a computer program thereon, wherein the computer program is executed by a processor to:
determine a motion state of a pool cleaning robot by obtaining a detection signal output by a steering apparatus; and
control, based on the motion state of the pool cleaning robot, the pool cleaning robot to perform a steering operation or confirm steering completion.
